# EUROPÄISCHE PATENTSCHRIFT

(11) **EP 0 755 750 B1**
(45) Veröffentlichungstag und Bekanntmachung des Hinweises auf die Patenterteilung: **13.10.1999**
(21) Anmeldenummer: 96109644.3
(22) Anmeldetag: 15.06.1996
(51) Int. Cl.: B23Q 11/04

(54) **Motorfrässpindel mit Auffahrsicherung**
Milling spindle with collision protection
Une broche porte-fraise avec protecteur de collision

(30) Priorität: 27.07.1995 DE 19527561
(43) Veröffentlichungstag der Anmeldung: 29.01.1997
(73) Patentinhaber: Maschinenfabrik Berthold Hermle Aktiengesellschaft, D-78559 Gosheim (DE)
(72) Erfinder: Schwörer, Tobias, 78598 Königsheim (DE); Braun, Hans-Dieter, 78665 Frittlingen (DE)
(74) Vertreter: Vetter, Hans, Dipl.-Phys. Dr.

(56) Entgegenhaltungen:
- EP-A- 0 346 319
- US-A- 3 682 283
- US-A- 4 507 025

## Beschreibung

Die Erfindung betrifft eine Werkzeugmaschine, insbesondere eine Motorfrässpindel, mit einem von einer Motorwelle über eine Spindel angetriebenen, mit der Spindel verbundenen Werkzeug, bei der die Motorwelle und die Spindel zueinander entlang einer gemeinsamen Drehachse ausgerichtet und getrennt voneinander in einem Gehäuse axial feststehend um diese Achse drehbar gelagert und miteinander drehfest verbunden sind, wobei zwischen der Motorwelle und der Spindel ein axiales Spiel besteht.

Beim Arbeiten mit einer derartigen Motorfrässpindel kommt es häufig zu Ausfällen aufgrund einer Kollision der Spindel mit der Motorwelle. Bei einer starken Kollision hat dies oft ein Austauschen der gesamten Motorspindel zur Folge. Insbesondere bei vertikalen Bearbeitungszentren hat eine derartige Spindel-Motorwellen-Kollision starke Auswirkungen. Aufgrund hoher Vorschubgeschwindigkeiten ist die kinetische Energie des gesamten Z-Schlittens Verursacher von Beschädigungen der Spindel und nicht mehr der Vorschubantrieb, so daß eine Sicherheitskupplung nahezu wirkungslos wird.

Eine Aufgabe der Erfindung besteht daher darin, eine Auffahrsicherung bereitzustellen, mit der die kinetische Energie im Kollisionsfall aufgenommen und somit der Gesamtschaden gering gehalten werden kann.

Diese Aufgabe wird erfindungsgemäß dadurch gelöst, daß bei einer in axialer Richtung zur Motorwelle einwirkenden Kraft, die einen bestimmten Schwellenwert übersteigt, eine Staucheinrichtung eine plastische Verformung ermöglicht, wobei eine maximale axiale Stauchung der Staucheinrichtung über einen axialen Verschiebeweg möglich ist, der geringer als das axiale Spiel zwischen der Motorwelle und der Spindel ist.

Im Kollisionsfall wird die Spindel eingedrückt, und die Staucheinrichtung wird plastisch verformt. Das axiale Spiel zwischen Spindel und Motorwelle läßt eine Verschiebung zu, ohne Kräfte auf den Motor zu übertragen. Die kinetische Energie des Stoßes wird in plastische Verformungsarbeit an der Staucheinrichtung und in Wärme umgewandelt und von der Motorwelle ferngehalten.

Durch die in den Unteransprüchen ausgeführten Maßnahmen sind vorteilhafte Weiterbildungen und Verbesserungen der in Anspruch 1 angegebenen Werkzeugmaschinen möglich.

Bei einer vorteilhaften Weiterbildung weist die Staucheinrichtung mindestens zwei Stauchhülsen auf, die jeweils in einer von mindestens zwei Ausnehmungen in einem Spannring angeordnet sind, der sich in einer Ebene senkrecht zur Achse befindet und zur axialen Festlegung der Spindel in bezug auf das Gehäuse mittels Spannschrauben dient, die durch Bohrungen in dem Spannring parallel zur Achse in eine an dem Gehäuse feststehende Haltebuchse hineingeschraubt sind, wobei die Stauchhülsen von der jeweiligen Schraube durchquert sind und zwischen einer Schulter in der Ausnehmung und dem Schraubenkopf fest eingespannt sind.

Dadurch wird die Auswechselbarkeit der Stauchhülsen gewährleistet und durch die Anzahl der im Spannring bereitgestellten Ausnehmungen und Stauchhülsen eine Anpassung an die bei einem Stoß umzuwandelnde kinetische Energie ermöglicht. So kann beim Arbeiten mit hohen kinetischen Energien ein Spannring mit entsprechend mehr Ausnehmungen mit jeweiliger Stauchhülse verwendet werden.

Vorzugsweise ist die Spindel in der Haltebuchse mittels eines Spindellagers drehbar und axial feststehend gelagert, wobei das Spindellager auf der Haltebuchse durch einen Befestigungsring und Befestigungsschrauben gegen eine Bewegung in der von der Motorwelle abgewandten Richtung und durch den Spannring, die Spannschrauben und die Stauchhülsen gegen einen Bewegung in der zu der Motorwelle weisenden Richtung befestigt ist. Hierdurch wird eine axiale Festlegung der Spindel gewährleistet.

Um einen Kollisionsfall und den daraus resultierenden gestauchten Zustand der Stauchhülsen und die Verschiebung des Spannrings anzuzeigen, wird beim Durchlaufen des Verschiebewegs aufgrund einer Krafteinwirkung ein Schalter zum Anzeigen der Verschiebung betätigt.

Bei einer besonders vorteilhaften Ausführungsform sind die Haltebuchse, das Spindellager, die Spindel und der Spannring miteinander verbunden und bilden eine Einheit, die an dem Gehäuse nur über die Haltebuchse mit den Halteschrauben befestigt ist.

Dadurch läßt sich die gesamte aus Haltebuchse, Spindellager, Spindel und Spannring bestehende Einheit komplett von dem Gehäuse und der Motorwelle trennen, indem man lediglich die Halteschrauben löst. Dies ermöglicht eine besonders einfache Instandsetzung nach einem Kollisionsfall, da der Spannring und die auszuwechselnden Stauchhülsen bei der herausgenommenen Einheit leicht zugänglich sind.

In einer weiteren vorteilhaften Ausführungsform ist der Schwellenwert durch die Stärke des Reibungs- und/oder Kraftschlusses in axialer Richtung zwischen der Haltebuchse und dem Spindellager bestimmt, der schwächer als der Reibungs- und/oder Kraftschluß in axialer Richtung zwischen dem Spindellager und der Spindel ist, wobei der Spannring das motorseitige Ende des Spindellagers zumindest zum Teil radial übergreift.

Dadurch wird gewährleistet, daß bei einem Stoß auf die Spindel nicht die Spindel relativ zum Spindellager, sondern die Spindel samt Spindellager relativ zur Haltebuchse in Richtung des Motors gleitet und den Spannring mitnimmt, wodurch die Stauchhülsen komprimiert werden.

Vorteilhafterweise ist die Motorwelle als eine Hohlwelle ausgebildet, in der die Spindel axial verschiebbar über eine formschlüssige Kupplung, z. B. eine Zahnkupplung, verbunden ist, die das Drehmoment überträgt.

Dies sorgt ebenfalls, insbesondere beim Trennen der kompletten "Spindeleinheit" von der Motorwelle und dem Gehäuse, für eine leichte Handhabung und Instandsetzung der Werkzeugmaschinen.

Weitere Vorteile, Merkmale und Anwendungsmöglichkeiten der Erfindung ergeben sich aus der nachfolgenden Beschreibung anhand der Zeichnung, wobei:

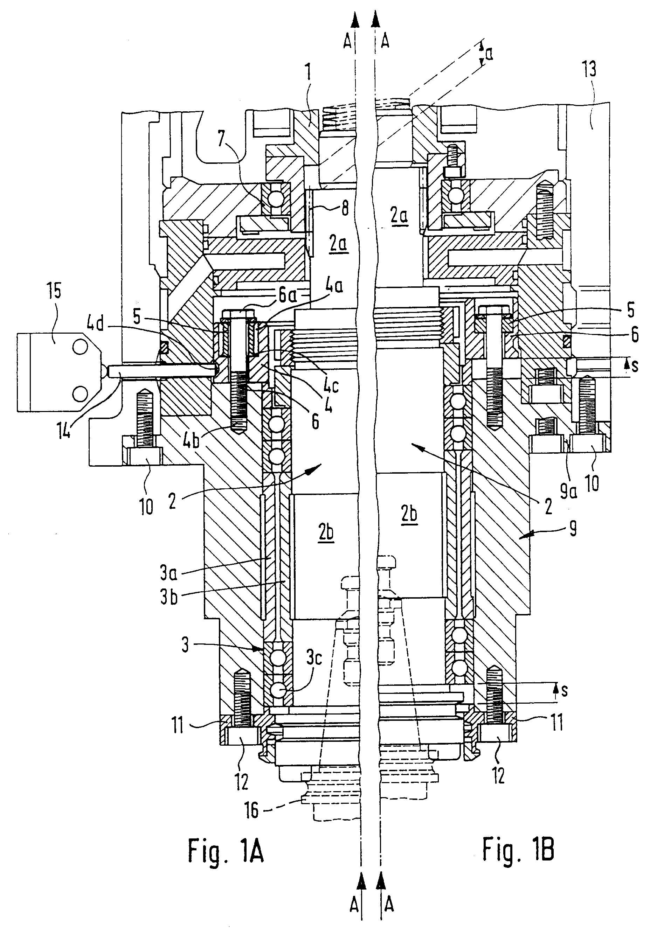

- Figur 1A: einen Teil der erfindungsgemäßen Werkzeugmaschine in einer durch ihre Achse verlaufenden Schnittansicht vor einer Kollision zeigt; und
- Figur 1B: einen Teil der erfindungsgemäßen Werkzeugmaschine in einer durch ihre Achse verlaufenden Schnittansicht nach einer Kollision zeigt.

Fig. 1A und Fig. 1B zeigen in einem Schnitt durch die Längsachse A der Werkzeugmaschine deren linke Hälfte vor einer Kollision bzw. deren rechte Hälfte nach einer Kollision.

Eine mit dem Antriebsmotor verbundene Hohlwelle 1 ist in einem Hohlwellenlager 7 drehbar und axial feststehend gelagert. Eine Zahnkupplung 8, deren Zahnkämme sich in axialer Richtung erstrecken, sorgt für eine Übertragung des Motordrehmoments auf die Spindel 2, wobei eine axiale Verschiebbarkeit der Spindel 2 gegenüber der Hohlwelle 1 gewährleistet ist. Diese Zahnkupplung 8 kann z. B. auch als Keilwellenverzahnung oder Evolventenverzahnung ausgebildet sein, wobei auch andere bekannte formschlüssige Kupplungen ensetzbar sind. Die Spindel 2 weist einen motorseitigen Teil 2a kleineren und einen werkzeugseitigen Teil 2b größeren Durchmessers auf. Der werkzeugseitige Teil 2b der Spindel 2 sitzt in einer im wesentlichen zylindrisch geformten Haltebuchse 9 mit einem Ringflansch 9a. Die Spindel 2 ist im Bereich ihres werkzeugseitigen Teils 2b mittels eines sich in Umfangrichtung erstreckenden Spindellagers 3 in der Haltebuchse 9 drehbar gelagert. Das Spindellager 3 besteht aus einem an der Haltebuchse 9 anliegenden äusseren Teil 3a und einem an der Spindel 2 anliegenden inneren Teil 3b, zwischen denen sich Kugeln 3c befinden, die eine relative Verdrehung des inneren Teils 3b gegenüber dem äußeren Teil 3a ermöglichen. Der innere Teil 3b des Spindellagers 3 ist mit der Spindel 2 kraftschlüssig, formschlüssig oder mittels einer Kombination aus Kraftschluß und Formschluß verbunden. Auch eine materialschlüssige Verbindung ist möglich. Der äußere Teil 3a des Spindellagers 3 ist mit der Haltebuchse 9 ebenfalls kraftschlüssig oder formschlüssig oder durch eine Kombination aus Kraftschluß und Formschluß verbunden. Vorzugsweise liegt nur eine kraftschlüssige Verbindung vor. Da bei einer Krafteinwirkung auf das Werkzeug 16 und damit die Spindel 2 in axialer Richtung die Verbindung zwischen Spindellager 3 und Spindel 2 beibehalten werden muß, während sich die Verbindung zwischen Haltebuchse 9 und Spindel 2 lösen muß, damit die Spindel 2 samt Spindellager 3 relativ zur Haltebuchse 9 in Richtung des Motors gleiten kann, muß die Verbindung zwischen Haltebuchse 9 und Spindellager 3 weniger stark ausgeprägt sein als diejenige zwischen Spindellager 3 und Spindel 2. Die Spindel 2 samt Spindellager 3 ist gegen eine Verschiebung relativ zur Haltebuchse 9 in einer vom Motor abgewandten Richtung mittels eines Befestigungsrings 11 festgelegt, der durch Befestigungsschrauben 12 in der Haltebuchse 9 befestigt ist und das werkzeugsseitige Ende des Spindellagers 3 zumindest teilweise radial übergreift, wobei zumindest der äußere Teil 3a des Spindellagers 3 von dem Befestigungsring 11 übergriffen wird. Ebenso ist die Spindel 2 samt Spindellager 3 gegen eine Bewegung relativ zur Haltebuchse 9 in einer dem Motor zugewandten Richtung mittels eines Spannrings 4 festgelegt, der das motorseitige Ende des Spindellagers 3 ebenfalls zumindest teilweise radial übergreift, wobei zumindest der äußere Teil 3a des Spindellagers 3 übergriffen wird. Dieser Spannring 4 ist ähnlich wie der Befestigungsring 11 mit Hilfe von Spannschrauben 6 an der Haltebuchse 9 befestigt. Somit wird jegliche Relativbewegung zwischen der aus Spindel 2 und Spindellager 3 gebildeten Einheit und der Haltebuchse 9 in axialer Richtung mit Ausnahme des Kollisionsfalls verhindert. Da die Zahnkupplung 8 eine relative Bewegung der Spindel 2 zu der Hohlwelle 1 in axialer Richtung zumindest im Rahmen des Spiels a zwischen der Hohlwelle 1 und der Spindel 2 ermöglicht, beruht die axiale Fixierung der aus Spindel 2 und Spindellager 3 bestehenden Einheit gegenüber eine Verschiebung in Richtung des Motors lediglich auf der Verbindung zwischen dem Spindellager 3 und der Haltebuchse 9 sowie dem radialen Übergriff des Spannrings 6 an dem motorseitigen Ende des Spindellagers 3. Der Spannring 4 weist in Umfangsrichtung gleichmäßig verteilte Ausnehmungen 4a und Bohrungen 4b auf. Die Bohrung 4b und der Boden der Ausnehmung 4a bilden eine kreisringförmige Schulter 4c, auf der eine Stauchhülse 5 in der Ausnehmung aufgenommen werden kann. Eine Spannschraube 6 erstreckt sich durch die in der Ausnehmung 4a sitzende Stauchhülse 5 und die Bohrung 4b in dem Spannring bis in eine Bohrung in der Haltebuchse 9. Somit ist die Stauchhülse 5 zwischen dem Schraubenkopf 6a der Spannschraube 6 und der kreisringförmigen Schulter 4c am Boden der Ausnehmung 4a eingespannt, während der Spannring 4 zwischen der Haltebuchse 9 und der Stauchhülse 5 eingespannt ist. Ein sich durch eine Bohrung in dem Gehäuse 13 erstreckender Stift 14 ragt in eine Vertiefung 4d in der nach außen weisenden Mantelfläche des Spannrings 4. Dieser Stift 14 ist mit einem Schalter 15 verbunden, der einen ungestauchten Zustand der Stauchhülse 5 vor einer Kollision (linke Seite) von einem gestauchten Zustand der Stauchhülse 5 nach einer Kollision (rechte Seite) unterschiedlich anzeigt.

Im Falle einer Kollision und einer daraus resultierenden Krafteinwirkung entlang der Achse A auf die Spindel 2 in Motorrichtung überträgt die Verbindung zwischen Spindel 2 und Spindellager 3 diese Kraft auf die Verbindung zwischen Spindellager 3 und Haltebuchse 9, wodurch es zu einer Kraft entlang der Verbindung zwischen Spindellager 3 und Haltebuchse 9 und einer Kraft auf den das motorseitige Ende des Spindellagers 3 übergreifenden Teil des Spannrings 4 kommt. Damit eine relative Verschiebung zwischen Spindellager 3 samt Spindel 2 und der Haltebuchse 9 zustande kommt, muß einerseits die Reibungskraft zwischen Haltebuchse 9 und Spindellager 3 und andererseits die zur plastischen Verformung der Stauchhülse 5 notwendige Verformungskraft überwunden werden. So wird während einer Kollision kinetische Energie durch Reibungsarbeit und plastische Verformungsarbeit in Wärme umgewandelt. Der bei der plastischen Verformung der Stauchhülse 5 maximal mögliche Verschiebeweg s wird im wesentlichen durch das Volumen des Stauchhülsenmaterials 5 und die radialen Abmessungen der Ausnehmung 4a des Spannrings 4 bestimmt. Fig. 1B zeigt die komprimierte Stauchhülse 5 nach einer Kollision, wobei der Verschiebeweg s kleiner als das axiale Spiel a zwischen der Hohlwelle 1 und der Spindel 2 ist. Durch die axiale Verschiebung des Spannrings 4 wird der Stift 14 in radialer Richtung nach außen geschoben und betätigt den Schalter 15. Die Haltebuchse 9 ist über ihren Ringflansch 9a und die Halteschrauben 10 an dem Gehäuse 13 befestigt. Da die Spindel 2, das Spindellager 3, der Spannring 4 und die Haltebuchse 9 eine zusammenhängende Einheit bilden, kann vor oder nach einer Kollision diese zusammenhängende Einheit durch Lösen der Halteschrauben 9 von dem Gehäuse 13 und der Hohlwelle 1 abgenommen werden. Auf diese Weise können nach einer Kollision die plastisch verformten Stauchhülsen 5 leicht ausgetauscht werden.

## Patentansprüche

1. Werkzeugmaschine, insbesondere Motorfrässpindel, mit einem von einer Motorwelle (1) über eine Spindel (2) angetriebenen, mit der Spindel verbundenen Werkzeug (16), bei der die Motorwelle (1) und die Spindel (2) zueinander entlang einer gemeinsamen Drehachse A ausgerichtet und getrennt voneinander in einem Gehäuse (13) axial feststehend um diese Achse A drehbar gelagert und miteinander drehfest (8) verbunden sind, wobei zwischen der Motorwelle (1) und der Spindel (2) ein axiales Spiel a besteht, dadurch gekennzeichnet, daß bei einer in axialer Richtung zur Motorwelle (1) einwirkenden Kraft, die einen bestimmten Schwellenwert übersteigt, eine Staucheinrichtung eine plastische Verformung ermöglicht, wobei eine maximale axiale Stauchung der Staucheinrichtung über einen axialen Verschiebeweg s möglich ist, der geringer als das axiale Spiel a zwischen der Motorwelle (1) und der Spindel (2) ist.

2. Werkzeugmaschine nach Anspruch 1, dadurch gekennzeichnet, daß die Staucheinrichtung mindestens zwei Stauchhülsen (5) aufweist, die jeweils in einer von mindestens zwei Ausnehmungen (4a) in einem Spannring (4) angeordnet sind, der sich in einer Ebene senkrecht zur Achse A befindet und zur axialen Festlegung der Spindel (2) in bezug auf das Gehäuse (13) mittels Spannschrauben (6) dient, die durch Bohrungen (4b) in dem Spannring (4) parallel zur Achse A in eine an dem Gehäuse (13) feststehende Haltebuchse (9) hineingeschraubt sind, wobei die Stauchhülsen (5) von der jeweiligen Schraube (6) durchquert sind und zwischen einer Schulter (4c) in der Ausnehmung (4a) und dem Schraubenkopf (6a) fest eingespannt sind.

3. Werkzeugmaschine nach Anspruch 2, dadurch gekennzeichnet, daß die Spindel (2) in der Haltebuchse (9) mittels eines Spindellagers (3) drehbar und axial feststehend gelagert ist, wobei das Spindellager (3) auf der Haltebuchse (9) durch einen Befestigungsring (11) und Befestigungsschrauben (12) gegen eine Bewegung in der von der Motorwelle (1) abgewandten Richtung und durch den Spannring (4), die Spannschrauben (6) und die Stauchhülsen (5) gegen eine Bewegung in der zu der Motorwelle (1) weisenden Richtung festgelegt ist.

4. Werkzeugmaschine nach einem der vorhergehenden Ansprüche, dadurch gekennzeichnet, daß beim Durchlaufen des Verschiebewegs s aufgrund einer Kraftübertragung ein Schalter (15) zum Anzeigen der Verschiebung betätigt (14) wird.

5. Werkzeugmaschine nach einem der Ansprüche 2 bis 4, dadurch gekennzeichnet, daß die Haltebuchse (9), das Spindellager (3), die Spindel (2) und der Spannring (4) miteinander verbunden sind und eine Einheit bilden, die an dem Gehäuse (13) nur über die Haltebuchse (9) mit den Halteschrauben (10) befestigt ist.

6. Werkzeugmaschine nach einem der Ansprüche 2 bis 6, dadurch gekennzeichnet, daß der Schwellenwert durch die Stärke des Reibungs- und/oder Kraftschlusses in axialer Richtung zwischen der Haltebuchse (9) und dem Spindellager (3) bestimmt ist, der schwächer als der Reibungs- und/oder Kraftschluß in axialer Richtung zwischen dem Spindellager (3) und der Spindel (2) ist, wobei der Spannring (4) das motorseitige Ende des Spindellagers (3) zumindest zum Teil radial übergreift.

7. Werkzeugmaschine nach einem der vorhergehenden Ansprüche, dadurch gekennzeichnet, daß die Motorwelle eine Hohlwelle (1) ist, mit der die Spindel (2) axial verschiebbar über eine formschlüssige Kupplung (8), z. B. eine Zahnkupplung, verbunden ist, die das Drehmoment überträgt.

## Claims

1. Machine tool, in particular powered cutter spindle, with a tool (16) driven by a motor shaft (1) via a spindle (2) to which it is connected, in which the motor shaft (1) and the spindle (2) are aligned with one another along a common axis of rotation A, mounted pivotably around this axis A, axially static and separately from one another in a housing (13), and linked together non-rotatably (8), wherein there is axial play 'a' between the motor shaft (1) and the spindle (2), characterized in that, with a force acting axially relative to the motor shaft (1) and exceeding a certain limit value, a compression device permits plastic deformation, wherein a maximum axial compression of the compression device is possible over an axial displacement 's' which is less than the axial play 'a' between the motor shaft (1) and the spindle (2).

2. Machine tool according to claim 1, characterized in that the compression device has at least two compression sleeves (5), each mounted in one of at least trio recesses (4a) in a clamping ring (4), which is in a plane at right-angles to the axis A and serves for axial location of the spindle (2) relative to the housing (13) by means of locking screws (6) which are screwed through drilled holes (4b) in the clamping ring (4) parallel to the axis A, into a retaining bush (9) fixed to the housing (13), wherein the compression sleeves (5) are penetrated by the respective screw (6) and are firmly clamped between a shoulder (4c) in the recess (4a) and the screw head (6a).

3. Machine tool according to claim 2, characterized in that the spindle (2) is mounted rotatably and axially fixed in the retaining bush (9) by means of a spindle bearing (3), wherein the spindle bearing (3) is fixed on the retaining bush (9) by a securing ring (11) and fixing screws (12) against movement away from the motor shaft (1), and by the clamping ring (4), the locking screws (6) and the compression sleeves (5) against movement towards the motor shaft (1).

4. Machine tool according to any of the preceding claims, characterized in that, during passage over the displacement path 's' due to a force transfer, a switch (15) to indicate the displacement is actuated (14).

5. Machine tool according to any of claims 2 to 4, characterized in that the retaining bush (9), the spindle bearing (3), the spindle (2) and the clamping ring (4) are connected to one another and form a unit, which is secured to the housing (13) only by the retaining screws (10) through the retaining bush (9).

6. Machine tool according to any of claims 2 to 6, characterized in that the limit value is determined by the strength of the axial frictional and/or positive engagement between the retaining bush (9) and the spindle bearing (3), which is weaker than the axial frictional and/or positive engagement between the spindle bearing (3) and the spindle (2), wherein the clamping ring (4) radially overlaps the motor-side end of the spindle bearing (3), at least partially.

7. Machine tool according to any of the preceding claims, characterized in that the motor shaft is a hollow shaft (1), to which the spindle (2) is connected with axial movement facility via a positively-engaging coupling (8), e.g. a gear coupling, which transmits the torque.

## Revendications

1. Machine-outil, en particulier broche de fraise à moteur, comportant un outil (16) entraîné par un arbre moteur (11) par l'intermédiaire d'une broche (2) et relié à la broche, dans laquelle l'arbre moteur (1) et la broche (2) sont orientés l'un par rapport à l'autre le long d'un axe de rotation (A) commun et sont montés séparément l'un de l'autre dans un carter (13), fixes axialement et pouvant tourner autour de cet axe (A), et sont reliés entre eux solidairement en rotation (8), tandis qu'il existe un jeu axial (a) entre l'arbre moteur (1) et la broche (2), caractérisée en ce que dans le cas d'une force qui agit dans la direction axiale par rapport à l'arbre moteur (1) et qui dépasse une valeur seuil déterminée, un dispositif de compression permet une déformation plastique, une compression axiale maximale du dispositif de compression étant possible sur une distance de déplacement axial (s) qui est inférieure au jeu axial (a) entre l'arbre moteur (1) et la broche (2).

2. Machine-outil selon la revendication 1, caractérisée en ce que le dispositif de compression comporte au moins deux douilles de compression (5), qui sont disposées chacune dans l'un d'au moins deux évidements (4a) pratiqués dans une bague de serrage (4), qui se trouve dans un plan perpendiculaire à l'axe (A) et qui sert à la fixation axiale de la broche (2) par rapport au carter (3), au moyen de vis de serrage (6), lesquelles sont vissées, à travers des perçages (4b) pratiqués dans la bague de serrage (4), parallèlement à l'axe (A), à l'intérieur d'une douille de maintien (9) qui fixe le carter (13), les douilles de compression (5) étant traversées par chaque vis (6) correspondante et étant fixement serrées entre un épaulement (4c) réalisé dans l'évidement (4a) et dans la tête de vis (6a).

3. Machine-outil selon la revendication 2, caractérisée en ce que la broche (2) est montée tournante et axialement fixe dans la douille de maintien (9) au moyen d'un palier de broche (3), le palier de broche (3) étant fixé sur la douille de maintien (9) par une bague de fixation (11) et des vis de fixation (12), contre un déplacement dans le sens opposé à l'arbre moteur (1) et par la bague de serrage (4), les vis de serrage (6) et les douilles de compression (5), contre un déplacement dans le sens dirigé vers l'arbre moteur (1).

4. Machine-outil selon l'une des revendications précédentes, caractérisée en ce que lorsque la distance de déplacement (s) est parcourue, un interrupteur (15) est actionné (14), par effet de la transmission d'une force, pour indiquer le déplacement.

5. Machine-outil selon l'une des revendications 2 à 4, caractérisée en ce que la douille de maintien (9), le palier de broche (3), la broche (2) et la bague de serrage (4) sont reliés entre eux et forment une unité qui est fixée au carter (13) uniquement par la douille de maintien (9) avec les vis de maintien (10).

6. Machine-outil selon l'une des revendications 2 à 6, caractérisée en ce que la valeur seuil est déterminée par l'intensité de l'assemblage par friction et/ou à force, dans la direction axiale, entre la douille de maintien (9) et le palier de broche (3), laquelle intensité est inférieure à celle de l'assemblage par friction et/ou à force dans la direction axiale entre le palier de broche et la broche (2), la bague de serrage (4) passant au moins en partie radialement sur l'extrémité côté moteur du palier de broche (3).

7. Machine-outil selon l'une des revendications précédentes, caractérisée en ce que l'arbre moteur est un arbre creux (1) auquel la broche (2) est reliée de manière à coulisser axialement, par l'intermédiaire d'un accouplement (8) par complémentarité de forme, par exemple un accouplement à dents, qui transmet le couple de rotation.
